# FASCICULE DE BREVET EUROPEEN

(11) **EP 0 578 594 B1**
(45) Date de publication et mention de la délivrance du brevet: **12.11.1997**
(21) Numéro de dépôt: 93440054.0
(22) Date de dépôt: 06.07.1993
(51) Int. Cl.: G01B 5/02

(54) **Dispositif de prise de mesures, en particulier à des endroits difficilement accessibles**
Vorrichtung zum Durchführen von Messungen, insbesondere für schwer zugängliche Stellen
Apparatus for making measurements, in particular for poorly accessible places

(30) Priorité: 09.07.1992 FR 9208695
(43) Date de publication de la demande: 12.01.1994
(73) Titulaire: Jimenez, Vincent, F-71850 Charnay les Macon (FR); Ruhlmann, René Philippe, 67370 Griesheim sur Souffel (FR)
(72) Inventeur: Jimenez, Vincent, F-71850 Charnay les Macon (FR); Ruhlmann, René Philippe, 67370 Griesheim sur Souffel (FR)
(74) Mandataire: Nuss, Pierre

(56) Documents cités:
- US-A- 4 167 065
- US-A- 4 989 341
- US-A- 5 082 276

## Description

La présente invention concerne le domaine de la prise de mesures, en particulier dans le bâtiment, et notamment en hauteur ou à d'autres endroits difficilement accessibles, à savoir au plafond ou à des parties en saillie, telles que des corniches extérieures ou autres, et a pour objet un dispositif de prise de mesures adapté à cet effet.

Actuellement, la prise de mesures, notamment dans le domaine du bâtiment, et plus particulièrement pour la détermination de dimensions précises de plafonds ou autres, s'effectue généralement, soit au moyen d'un double-mètre et avec prise de repères par une personne seule montée sur une échelle ou sur un échafaudage, soit au moyen d'un décamètre mis en oeuvre par deux personnes montées sur des échelles ou sur un échafaudage ou par une seule personne immobilisant une extrémité du décamètre avec un élément accessoire, tel qu'une pointe un analogue. Une telle prise de mesures permet l'obtention d'une précision acceptable, mais nécessite au moins la mise en oeuvre d'un accessoire tel qu'une échelle ou un échafaudage permettant d'accéder au niveau où la mesure est à prendre et, dans certains cas, la présence de deux personnes.

Il en résulte qu'une telle opération devient relativement complexe, longue et onéreuse, du fait des accessoires nécessaires, et/ou de la main d'oeuvre nécessaire.

En outre, dans le cas où une prise de mesures est nécessaire au-dessus d'un vide, par exemple dans le cadre d'un décrochement de parois, intérieur ou extérieur, il est absolument nécessaire de prévoir un certain nombre d'éléments de sécurité, tels que des échafaudages ou des échelles spéciales, afin de permettre des évolutions des opérateurs en parfaite sécurité.

On connaît également, par US-A-4 167 065, un dispositif correspondant au préambule de la revendication 1. Cependant, un tel dispositif n'est applicable que dans des conditions bien précises, à savoir dans le cas où des tubes à mesurer, ou analogues, sont posés à même le sol et donc parfaitement accessibles à leurs deux extrémités. En effet, aucun des deux moyens n'est prévu télescopique, de sorte qu'il n'est pas possible d'atteindre des points disposés hors de portée des mains, en particulier à une hauteur importante par rapport à la taille humaine ou au-dessus du vide.

La présente invention a pour but de pallier ces inconvénients en proposant un dispositif de prise de mesures permettant d'accéder à des endroits difficilement accessibles, ce sans risque pour l'opérateur.

A cet effet, l'invention a pour objet un dispositif de prise de mesures, en particulier à des endroits difficilement accessibles, essentiellement constitué par des premier et second moyens applicables chacun par une extrémité à une extrémité correspondante d'une longueur à mesurer et par un moyen de détermination de l'écartement entre les extrémités desdits premier et second moyens et donc de la longueur à mesurer, monté sur le premier desdits moyens, le premier moyen étant pourvu, en outre, d'un moyen d'affichage par lecture directe, caractérisé en ce qu'au moins l'un des moyens, de préférence le second moyen, est constitué par une perche télescopique pourvue d'une extrémité destinée à coopérer avec le moyen de détermination de l'écartement monté sur le premier moyen.

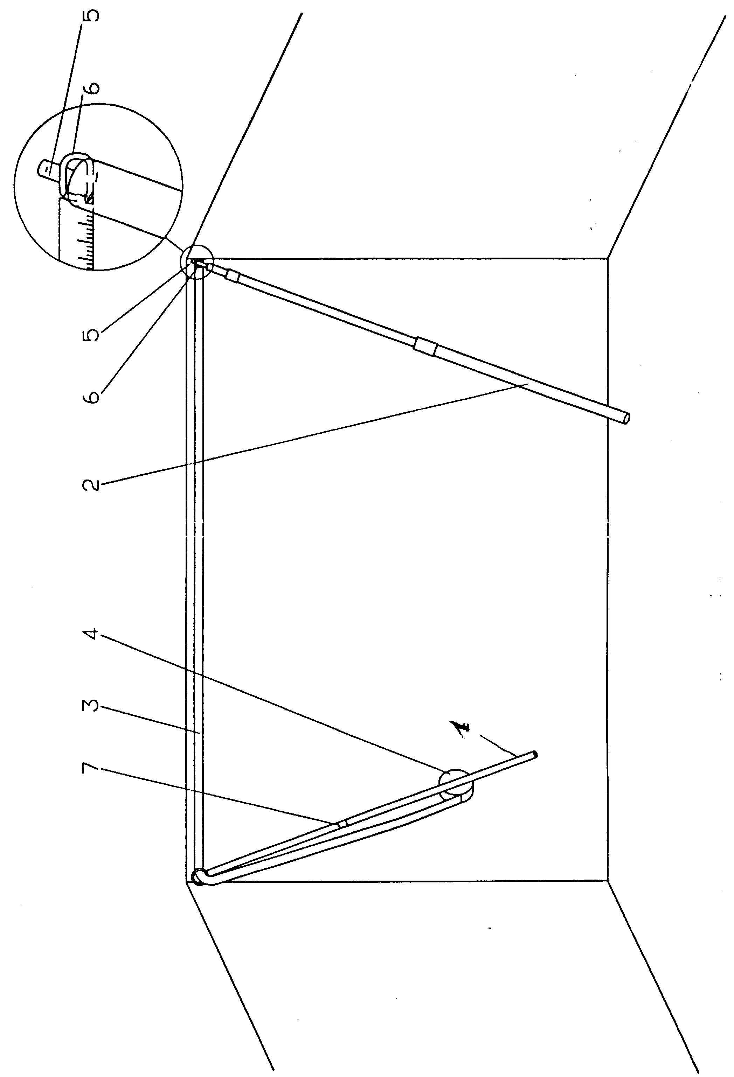

L'invention sera mieux comprise, grâce à la description ci-après, qui se rapporte à un mode de réalisation préféré, donné à titre d'exemple non limitatif, et expliqué avec référence au dessin schématique annexé, dont la figure unique est une vue en perspective du dispositif conforme à l'invention.

Le dispositif de prise de mesures, en particulier à des endroits difficilement accessibles, représenté à la figure unique du dessin annexé, est essentiellement constitué par des premier et second moyens 1 et 2 applicables chacun par une extrémité à une extrémité correspondante d'une longueur 3 à mesurer et par un moyen 4 de détermination de l'écartement entre les extrémités desdits moyens 1 et 2 et donc de la longueur à mesurer monté sur le premier 1, desdits moyens 1 et 2.

Au moins l'un des moyens 1 et 2, de préférence le second moyen 2, est avantageusement constitué par une perche télescopique pourvue d'une extrémité 5 destinée à coopérer avec le moyen 4 de détermination de l'écartement monté sur le premier moyen 1.

Une telle réalisation du second moyen 2 permet d'amener son extrémité 5 directement à l'extrémité de la longueur 3 à mesurer et de maintenir ladite extrémité 5 en position par extension des éléments télescopiques constitutifs de la perche formant le second moyen 2, dont l'extrémité inférieure est mise en appui sur le sol ou contre un calage.

Le moyen 4 de détermination de l'écartement, monté sur le premier moyen 1, est avantageusement un moyen mécanique à ruban, à câble ou autre, monté sur un enrouleur automatique ou à main, et dont l'extrémité libre 6 est pourvue d'un dispositif de raccordement à l'extrémité 5 du moyen 2. Dans un tel mode de réalisation, l'extrémité 5 se présente sous forme d'une pointe coopérant avec une boucle formant l'extrémité libre 6 du moyen mécanique.

En outre, le premier moyen 1 est pourvu d'un moyen d'affichage 7, par exemple par lecture directe, sous forme d'un repère ou marquage prévu sur ledit premier moyen 1 et coopérant avec des marquages prévus sur le ruban, câble ou analogue. Dans un tel mode de réalisation, la distance entre l'extrémité supérieure du premier moyen 1 et le marquage ou repère 7 correspond à une longueur non marquée s'étendant avant l'extrémité libre 6 du ruban ou analogue.

Il est également possible, suivant une autre variante de réalisation de l'invention non représentée au dessin annexé, de réaliser le moyen d'affichage 7 sous forme d'un compteur relié au moyen mécanique et affichant directement sa longueur déroulée.

Le premier moyen 1 est avantageusement tenu à la main par l'opérateur effectuant le relevé de mesures et appliqué par son extrémité supérieure libre à l'autre extrémité de la longueur 3 à mesurer, de manière à tendre parfaitement le moyen 4 entre les deux extrémités, de sorte qu'il peut facilement lire, soit directement au niveau du repère 7, soit sur le compteur du moyen 4, la longueur 3.

Selon une variante de réalisation de l'invention, le moyen 4 peut également être constitué par un ensemblle émetteur - récepteur monté à l'extrémité supérieure du premier moyen 1 et coopérant avec un réflecteur monté à l'extrémité 5 du second moyen 2. Un tel ensemble peut se présenter sous forme d'un émetteur laser coopérant avec un miroir monté à l'extrémité 5 du second moyen 2 ou encore sous forme d'un émetteur ultra-sons coopérant avec un réflecteur monté à l'extrémité 5. Dans un tel mode de réalisation, le moyen d'affichage correspondant est avantageusement constitué par un ensemble électronique de traitement de signaux.

Il est également possible, conformément à une autre caractéristique de l'invention, de munir le premier moyen 1 d'un dispositif électronique (non représenté) de mémorisation des mesures relevées, pouvant être relié, pour l'exploitation, à un moyen externe indépendant de traitement de données, tel que, notamment, un dispositif de dessin assisté par ordinateur. Ainsi, il devient possible de procéder à un relevé de cote et à la mémorisation de ces dernières, puis au transfert de ces données dans une machine de traitement, dont le logiciel sera adapté à la réalisation automatique de plans sur la base de ces données.

Un tel procédé est particulièrement intéressant dans le cadre de la réalisation de plafonds tendus préparés en usine et amenés sur chantier, prêts à la pose.

Grâce à l'invention, il est possible de réaliser une prise de mesures rapide et précise, sans destruction et par une personne seule, donc à moindres frais.

En outre, ce dispositif permet également des relevés de dimensions à des endroits difficilement accessibles, à savoir notamment sur des parties en saillie au-dessus d'un vide ou d'une surface non praticable.

Bien entendu, l'invention n'est pas limitée au mode de réalisation décrit et représenté au dessin annexé. Des modifications restent possibles, notamment du point de vue de la constitution des divers éléments ou par substitution d'équivalents techniques, sans sortir pour autant du domaine de protection de l'invention.

## Revendications

1. Dispositif de prise de mesures, en particulier à des endroits difficilement accessibles, essentiellement constitué par des premier et second moyens (1 et 2) applicables chacun par une extrémité à une extrémité correspondante d'une longueur (3) à mesurer et par un moyen (4) de détermination de l'écartement entre les extrémités desdits premier et second moyens (1 et 2) et donc de la longueur (3) à mesurer, monté sur le premier (1) desdits moyens (1 et 2), le premier moyen (1) étant pourvu, en outre, d'un moyen (7) d'affichage par lecture directe, caractérisé en ce qu'au moins l'un des moyens (1 et 2), de préférence le second moyen (2), est constitué par une perche télescopique pourvue d'une extrémité (5) destinée à coopérer avec le moyen (4) de détermination de l'écartement monté sur le premier moyen (1).

2. Dispositif, suivant la revendication 1, caractérisé en ce que le moyen (4) de détermination de l'écartement, est un moyen mécanique à ruban, à câble ou autre, monté sur un enrouleur automatique ou à main, et dont l'extrémité libre (6) est pourvue d'un dispositif de raccordement à l'extrémité (5) du second moyen (2),

3. Dispositif, suivant la revendication 2, caractérisé en ce que l'extrémité (5) se présente sous forme d'une pointe coopérant avec une boucle formant l'extrémité libre (6) du moyen mécanique.

4. Dispositif, suivant la revendication 2, caractérisé en ce que le moyen d'affichage (7) est sous forme d'un compteur relié au moyen mécanique et affichant directement sa longueur déroulée.

5. Dispositif, suivant la revendication 1, caractérisé en ce que le moyen (4) est constitué par un ensemble émetteur-récepteur monté à l'extrémité supérieure du premier moyen (1) et coopérant avec un réflecteur monté à l'extrémité (5) du second moyen (2).

6. Dispositif, suivant la revendication 5, caractérisé en ce que l'ensemble émetteur-récepteur se présente sous forme d'un émetteur laser monté à l'extrémité supérieure du premier moyen (1) et coopérant avec un miroir monté à l'extrémité (5) du second moyen (2).

7. Dispositif, suivant la revendication 5, caractérisé en ce que l'ensemble émetteur-récepteur se présente sous forme d'un émetteur ultra-sons monté à l'extrémité supérieure du premier moyen (1) et coopérant avec un réflecteur monté à l'extrémité (5).

8. Dispositif, suivant l'une quelconque des revendications 6 et 7, caractérisé en ce que l'ensemble émetteur-récepteur coopère avec un moyen d'affichage avantageusement constitué par un ensemble électronique de traitement de signaux.

9. Dispositif, suivant l'une quelconque des revendications 1, 2, 4 et 5 , caractérisé en ce que le premier moyen (1) est muni d'un dispositif électronique de mémorisation des mesures relevées, pouvant être relié, pour l'exploitation, à un moyen externe indépendant de traitement de données, tel que, notamment, un dispositif de dessin assisté par ordinateur.

## Patentansprüche

1. Vorrichtung zum Durchführen von Messungen, insbesondere an schwer zugänglichen Stellen, im wesentlichen bestehend aus ersten und zweiten Mitteln (1 und 2), von denen jedes mit einem Ende anbringbar ist an einem entsprechenden Ende einer zu messenden Länge (3), und aus einem Mittel (4) zur Bestimmung des Abstandes zwischen den Enden der genannten ersten und zweiten Mittel (1 und 2) und derart der zu messenden Länge (3), das auf dem ersten (1) der genannten Mittel (1 und 2) befestigt ist, wobei das erste Mittel (1) außerdem versehen ist mit einem Mittel (7) zur Anzeige durch Direktablesung,
dadurch gekennzeichnet,
daß wenigstens eines der Mittel (1 und 2) vorzugsweise das zweite Mittel (2) gebildet ist durch eine Teleskopstange, die mit einem Ende versehen ist, das bestimmt ist, um mit dem Mittel (4) zur Bestimmung des Abstandes zusammenzuwirken, das am ersten Mittel befestigt ist.

2. Vorrichtung gemäß Anspruch 1,
dadurch gekennzeichnet,
daß das Mittel (4) zur Bestimmung des Abstandes ein mechanisches Mittel aus Band, Seil oder ähnlichem ist, das auf einem automatischen oder manuellen Wickler befestigt ist, und das dessen freies Ende (6) versehen ist mit einer Vorrichtung zur Verbindungsherstellung mit dem Ende (5) des zweiten Mittels (2).

3. Vorrichtung gemäß Anspruch 2,
dadurch gekennzeichnet,
daß das Ende (5) sich darstellt in der Form einer Spitze, die mit einer Ose zusammenwirkt, die das freie Ende (6) des mechanischen Mittels bildet.

4. Vorrichtung gemäß Anspruch 2,
dadurch gekennzeichnet,
daß das Mittel zur Anzeige (7) in Form eines mit dem mechanischen Mittel verbundenen Zählers ist und direkt dessen abgerollte Länge anzeigt.

5. Vorrichtung gemäß Anspruch 1,
dadurch gekennzeichnet,
daß das Mittel (4) gebildet wird durch einen Sender-Empfänger-Aufbau, der am oberen Ende des ersten Mittels (1) befestigt ist und mit einem Reflektor zusammenwirkt, der am Ende (5) des zweiten Mittels (2) befestigt ist.

6. Vorrichtung gemäß Anspruch 5,
dadurch gekennzeichnet,
daß sich der Sender-Empfänger-Aufbau darstellt in Form eines Laser-Emitters, der am oberen Ende des ersten Mittels (1) befestigt ist und zusammenwirkt mit einem Spiegel, der am Ende (5) des zweiten Mittels (2) befestigt ist.

7. Vorrichtung gemäß Anspruch 5,
dadurch gekennzeichnet,
daß sich der Sender-Empfänger-Aufbau darstellt in Form eines Ultraschall-Emitters, der am oberen Ende des ersten Mittels (1) befestigt ist und zusammenwirkt mit einem Reflektor, der am Ende (5) befestigt ist.

8. Vorrichtung gemäß einem beliebigen der Ansprüche 6 und 7,
dadurch gekennzeichnet,
daß der Sender-Empfänger-Aufbau mit einem Anzeigemittel zusammenwirkt, das vorteilhafterweise gebildet wird durch einen elektronischen Signalverarbeitungsaufbau.

9. Vorrichtung gemäß einem beliebigen der Ansprüche 1, 2, 4 und 5,
dadurch gekennzeichnet,
daß das erste Mittel (1) mit einer elektronischen Vorrichtung zur Speicherung der durchgeführten Messungen versehen ist, die zur Auswertung mit einem externen unabhängigen Mittel zur Datenverarbeitung verbindbar ist, wie beispielsweise einer rechnerunterstützten Entwurfsvorrichtung.

## Claims

1. Apparatus for taking measurements, in particular in poorly accessible places, essentially consisting of first and second means (1 and 2) each applicable by one end to a corresponding end of a length (3) to be measured and of a means (4) for determining the distance between the ends of said first and second means (1 and 2) and therefore the length (3) to be measured, mounted on the first (1) of said means (1 and 2), the first means (1) also being provided with a means (7) for display by direct reading, characterised in that at least one of the means (1 and 2), preferably the second means (2), consists of a telescopic rod provided with one end (5) intended to cooperate with the means (4) for determining the distance mounted on the first means (1).

2. Device according to claim 1, characterised in that the means (4) for determining the distance is a ribbon, cable or other type of mechanical means mounted on an automatic or manual winder and of which the free end (6) is provided with a device for connection to the end (5) of the second means (2).

3. Device according to claim 2, characterised in that the end (5) has the form of a point cooperating with a loop forming the free end (6) of the mechanical means.

4. Device according to claim 2, characterised in that the display means (7) is in the form of a counter connected to the mechanical means and directly displaying its unwound length.

5. Device according to claim 1, characterised in that the means (4) consists of an emitter-receiver unit mounted at the upper end of the first means (1) and cooperating with a reflector mounted at the end (5) of the second means (2).

6. Device according to claim 5, characterised in that the emitter-receiver unit has the form of a laser emitter mounted at the upper end of the first means (1) and cooperating with a mirror mounted at the end (5) of the second means (2).

7. Device according to claim 5, characterised in that the emitter-receiver unit has the form of an ultrasonic emitter mounted at the upper end of the first means (1) and cooperating with a reflector mounted at the end (5).

8. Device according to any one of claims 6 and 7, characterised in that the emitter-receiver unit cooperates with a display means advantageously consisting of an electronic signal-processing unit.

9. Device according to any one of claims 1, 2, 4 and 5, characterised in that the first means (1) is equipped with an electronic device for storing the measurements taken which can be connected, for use, to an independent external data processing means such as, in particular, a computer assisted design device.
